# EUROPEAN PATENT APPLICATION

(11) **EP 2 119 674 A1**
(43) Date of publication of application: **18.11.2009**
(21) Application number: 07860445.1
(22) Date of filing: 28.12.2007
(51) Int. Cl.: C02F 1/28, C02F 1/42, C02F 1/44, E03C 1/08, E03C 1/10

(54) **WATER PURIFIER**

(30) Priority: 16.01.2007 JP 2007007062; 16.01.2007 JP 2007007065
(71) Applicant: Toray Industries, Inc., Tokyo 103-8666 (JP)
(72) Inventor: ASANO, Satoru, Otsu-shi Shiga 520-8558 (JP); YAMAGUCHI, Nobu, Otsu-shi Shiga 520-8558 (JP); NAKANISHI, Takayuki, Otsu-shi Shiga 520-8558 (JP); YASUNAGA, Mikiko, Otsu-shi Shiga 520-8558 (JP); ITAKURA, Junji, Otsu-shi Shiga 520-8558 (JP)
(74) Representative: Hager, Thomas Johannes
(86) International application number: PCT/JP2007/075242
(87) International publication number: WO 2008/087850

(57) **Abstract**

A water purifier including a flow path switch with a plurality of flow paths and a valve body for selectively opening and closing the plurality of flow paths, wherein for the flow path arranged in the flow path switch, at least a raw water shower introduction port and a raw water stream introduction port are arranged, a raw water discharge shower discharge port is arranged on a downstream side of the raw water shower introduction port and a raw water stream discharge port is arranged on a downstream side of the raw water stream introduction port, and a substantially disc-shaped rectifier plate with a plurality of water flow holes is arranged on a flow path between the raw water shower introduction port and the raw water shower discharge port.

## Description

### TECHNICAL FIELD

The present invention relates to a water purifier.

### BACKGROUND ART

A counter-top type, a direct faucet mount type, and an under-sink type equipped with a filter cartridge incorporating an adsorbent such as activated carbon or hollow fibers, and a main body for selectively switching a flow path by opening and closing a flow path of purified water, raw water stream, and raw water shower with valve elements are known for a water purifier.

In the direct faucet mount type water purifier used by attaching a main body to the faucet and selecting the flow path with a selection valve, a type of directly discharging the raw water from the main body, and discharging the purified water from the main body or directly discharging the purified water from a cartridge attached to the main body is proposed. The discharging of the raw water and the purified water is typically performed by operating a selection lever which cooperatively operates with the selection valve.

The following techniques (1) to (3) are disclosed from the prior art for such water purifier.

### (1) Technique related to shower discharge of water purifier

In such water purifiers, a method of discharging water from a shower discharge port including great number of small holes called shower holes is typically used to discharge the shower water. However, since a flow path (hereinafter referred to as shower introduction port) in the water purifier main body communicating a flow path switch and a shower discharge port has a small cross-sectional area compared to the shower discharge port, the water flowing in from the shower introduction port is not uniformly distributed to each shower hole, and the manner the shower water is discharged tends to vary depending on the position of the shower discharge port.

As a method for solving such problem, patent document 1 discloses a water purifier in which an opening area of the shower hole is reduced in an aim of giving force to the shower water flow or to save water. In patent document 1, the processing method of forming great number of shower holes having a small diameter in a thin plate is realized to reduce the opening area of the shower hole. However, when the faucet is fully opened, or at locations where the water pressure of the water line is originally high, an excessive load is applied to the thin plate at the position immediately below the shower introduction port, whereby the thin plate may be deformed or break and even the shower water is not uniformly discharged.

As another solving method, patent document 2 proposes a water purifier in which a shower discharge port and a rectifier means are integrally molded. In this method, the raw water discharged from the shower introduction port is once received at the recess integrally molded in the shower discharge port, and then uniformly distributed to the shower discharge port. In this method, if the thin plate as described in patent document 1 is used in the shower discharge port, the rectifier means cannot be integrally molded, and the rectifier means needs to be separately arranged.

As one method of separately arranging the rectifier means, patent document 3 proposes a method of arranging the rectifier means at an intermediate position between the shower introduction port on the upstream side of the shower supply port and the shower discharge port. The water introduced from the shower introduction port is uniformly dispersed in the circumferential direction by an annular ring-shaped rectifier means and then discharged from the shower hole. However, the shape of the rectifier means is not addressed at all, and the specific mode of uniformly discharging from the shower discharge port is not suggested.

In patent document 4, three spherical bodies are incorporated in the main body as a selection valve, so that one arbitrary discharging method can be selected from a raw water stream type, raw water shower type, and purified water discharged from the cartridge with a selection lever.

The discharge port of the raw water stream type and the raw water shower type is generally arranged at the lower surface of the main body. The main body is mostly made of resin, and the shower portion also has the shower hole directly formed in the resin. Thus, when used over a long period of time by being attached to the faucet, water, cleanser, and the like may splash in the kitchen thereby forming a bio-film at the periphery of the shower hole or blocking the shower hole.

As shown in patent document 5 and patent document 6, a method of providing the shower portion of the water purifier with a stainless steel plate is proposed. Patent document 5 discloses a stainless steel plate having a shower water sprinkling hole formed in an annular form of two or more columns. The characteristic lies in that the raw water discharged from the annular shower water sprinkling hole on the inner side is discharged towards the center axis of the stainless steel plate.

Patent document 6 discloses a mode in which an insert molding hole is formed in the stainless steel plate, and a reinforcement rib is fixed through insert molding with resin.

### (2) Technique related to selection lever of water purifier

Conventionally, a method of transmitting the rotation of a dial or a lever directly to a shaft and open/close driving a selection valve through the shaft, and a method of converting the rotation to a reciprocating movement and performing mode selection are known as a method of selecting the discharge mode of the water purifier. Such conventional methods require the adjustment of the dial and the lever to a target position, and have inconveniency in that the operation position to which it is to be operated needs to be checked and whether or not the operated position is accurately adjusted to the target position needs to be checked for every operation. If the adjustment position is shifted, the water of each discharge mode may be in a coexisting state. Therefore, in view of checking and position adjustment, the selection of the discharge mode in the conventional water purifier may not necessarily be concluded as one-touch operation. In the conventional water purifier, a structure of fitting the valve element to a water flow hole by way of a seal material such as O-ring to achieve reliability of the seal is often adopted as a structure of a selection valve at the interior. In such structure, however, satisfactory sealability is obtained but a relatively large force is required to attach and detach the valve element to and from the water flow hole, and accompanied therewith, a relatively large force is also required in the operation force for selecting the discharge mode.

As a water purifier in which the discharge mode can be very easily selected with the true one-touch operation without requiring adjustment of the operation position, and the like, and in particular, in which the operability and the operation feeling of the selection lever are enhanced, patent document 7 proposes a water purifier including a lever for selecting the discharge mode, the lever being rotatably supported at both ends, and a click mechanism for giving a click feeling during the lever operation, where the lever reciprocates to return to an original position after being operated in one direction, both ends of the lever are supported so as to sandwich a connecting portion of the faucet, and the click mechanism is arranged with a spring provided at one part of a shaft for transmitting the movement of the lever to the valve element, a biasing member biased by the spring, and a receiving portion of the biasing member.

However, since the water purifier is coupled to the faucet of the water line at the upper surface, if the lever is supported at both ends, the operating direction of the lever is limited to the up and down direction by the front surface of the water purifier, whereby load is applied to the faucet of the water line by the lever operation, the faucet of the water line may break, and the water purifier may drop off from the faucet of the water line during the lever operation if the coupling of the water purifier and the faucet of the water line is weak.

### (3) Technique related to antibacterial of water purifier

Resin molded article made of resin such as ABS is greatly used for the body configuring the main body of the water purifier, and the outer surface of the main body is often the molded resin layer. The outer surface is sometimes coated to provide shine.

However, since water including cleanser and stain splashes and easily attaches to the outer surface of the water purifier usually used in the kitchen, a stain layer is easily formed on the outer surface as the bacteria increases in the attached stain, and it becomes difficult to maintain a clean state.

With respect to such problem, patent document 8 proposes a mode of spraying fluorocarbon resin on the inner wall surface of the conduit and then further spraying activated carbon and sintering. Although this method is effective to water passing through or remaining in the conduit, it is not effective on the stain attached to the outer surface of the water purifier or the vicinity of the discharge port.

Patent document 9 proposes a method in which colloidal matter containing silver is applied to the water purifier component. The silver ion has an antibacterial effect, where the silver ion is eluted when applied to the water contacting member to provide antibacterial effect.

Patent document 10 proposes a mode in which the surface of the water purifier is coated with fluorocarbon resin. Although the method of coating the fluorocarbon resin in an aim of achieving antibacterial effect is known, an example applied to the water purifier which is used by being attached to the faucet is not known.
[Patent document 1] Japanese Laid-Open Patent Publication No. 2004-174472
[Patent document 2] Japanese Laid-Open Patent Publication No. 2004-50086
[Patent document 3] Japanese Laid-Open Utility Model No. 3-4983
[Patent document 4] Japanese Laid-Open Patent Publication No. 9-144913
[Patent document 5] Japanese Laid-Open Patent Publication No. 2004-230360
[Patent document 6] Japanese Laid-Open Patent Publication No. 2004-322066
[Patent document 7] Japanese Patent Publication No. 3831691
[Patent document 8] Japanese Laid-Open Patent Publication No. 9-192017
[Patent document 9] Japanese Laid-Open Patent Publication No. 2003-136054
[Patent document 10] Japanese Laid-Open Patent Publication No. 2003-10839

### DISCLOSURE OF THE INVENTION

### Problems to be Solved by the Invention

The present invention aims to solve the problem related to the shower discharge, the problem related to the selection lever, and the problem related to antibacterial in the water purifier as described below.

### (1) Problem related to the shower discharge

A water purifier capable of uniformly and satisfactorily obtaining a water dispersion shape of the shower water without inhibiting compactness of the water purifier has not been proposed.

In the conventional water purifier as disclosed in patent document 5 and patent document 6, a stainless steel thin plate of about 0.3 mm is used, and thus the insert molding hole is formed in the vicinity of the inner peripheral edge of the stainless steel thin plate so as not to deform the stainless steel thin plate that directly receives the raw water pressure, and the stainless steel thin plate is held from both the outer periphery and the inner periphery. As a result, the range where the shower hole can be arranged is reduced, and the injecting direction is changed according to the position of the shower hole so that shower can be injected in a wide range.

However, although it is not impossible to process the stainless steel thin plate in the above manner, processing accuracy is demanded, and it is also a disadvantage in terms of cost. Furthermore, since the plate thickness is thin, that is, about 0.3 mm, clogging easily occurs once the bio-film is attached.

### (2) Problem related to the selection lever

There has not been proposed a water purifier capable of very easily selecting the discharge mode with a light one-touch operation without requiring adjustment of the operation position, and the like, enhancing the operability and the operation feeling of the selection lever, and in which load does not apply on the faucet of the water line and damage of the faucet of the water line and dropping of the water purifier from the faucet of the water line do not occur.

### (3) Problem related to antibacterial

According to the invention disclosed in patent document 9, the silver ion is eluted from the portion exposed from the applied film, but the silver ion is not eluted from the colloidal matter embedded on the inner side of the applied film, and thus all colloidal matters cannot be used for antibacterial action. Furthermore, after the silver ion contained in the colloidal matter finishes being eluted, the antibacterial effect may no longer continue.

According to the invention disclosed in patent document 10, a specific method of applying the fluorocarbon resin on the surface of the water purifier has not been addressed.

### Means for Solving the Problems

In order to achieve the above aim, the water purifier of the present invention has the following features.

In other words, according to the present invention, there is provided a water purifier including a flow path switch with a plurality of flow paths and a valve body for selectively opening and closing the plurality of flow paths, wherein for the flow path arranged in the flow path switch, at least a raw water shower introduction port and a raw water stream introduction port are arranged, a raw water discharge shower discharge port is arranged on a downstream side of the raw water shower introduction port and a raw water stream discharge port is arranged on a downstream side of the raw water stream introduction port, and a substantially disc-shaped rectifier plate with a plurality of water flow holes is arranged on a flow path between the raw water shower introduction port and the raw water shower discharge port.

According to a preferred embodiment of the present invention, there is provided the water purifier, wherein a diameter of the plurality of water flow holes formed in the rectifier plate is greater than a diameter of a shower discharge hole formed in the shower discharge port.

According to a preferred embodiment of the present invention, there is provided the water purifier, wherein a sum of area of the plurality of water flow holes formed in the rectifier plate at a rectifier surface of the rectifier plate is greater than a sum of area of a shower discharge hole formed at the shower discharge port at a shower discharge port surface of the shower discharge port.

According to a preferred embodiment of the present invention, there is provided the water purifier, wherein the raw water shower discharge port has a substantially circular ring shape, the raw water stream discharge port being formed at substantially the middle.

According to a preferred embodiment of the present invention, there is provided the water purifier, wherein a cylindrical rib for covering the periphery of the raw water stream discharge port is arranged; and the raw water stream introduction port is arranged immediately above the raw water stream discharge port.

According to a preferred embodiment of the present invention, there is provided the water purifier, wherein a hole thickness L of the shower discharge hole at the shower discharge port is smaller than or equal to 1 mm.

According to a preferred embodiment of the present invention, there is provided a water purifier including a main body internally incorporating a selection valve and a filter cartridge removably attached to the main body; wherein the main body includes a raw water inflow port for receiving raw water, a raw water discharge port for discharging the raw water, and a cartridge water feeding port including a raw water feeding port for passing the raw water to the filter cartridge; the raw water discharge port has a structure in which a raw water stream discharge hole is arranged at a central part and a plurality of raw water shower discharge holes is formed at a substantially circular ring part of the peripheral edge; the substantially circular ring part formed with the plurality of raw water shower discharge holes is made of a circular ring-shaped stainless steel plate perforated with the plurality of shower discharge holes and formed with cutouts at peripheral edges; and an inner peripheral edge and an outer peripheral edge of the circular ring-shaped stainless steel plate are sandwiched with resin forming a lower body of the main body.

According to a preferred embodiment of the present invention, there is provided the water purifier, wherein the circular ring-shaped stainless steel plate is integrally molded with the lower body of the main body.

According to a preferred embodiment of the present invention, there is provided the water purifier, wherein the circular ring-shaped stainless steel plate has the inner peripheral edge and the outer peripheral edge sandwiched with ribs and is formed with ribs directly connecting the inner peripheral edge and the outer peripheral edge.

According to a preferred embodiment of the present invention, there is provided the water purifier, wherein one to three ribs connecting the inner peripheral edge and the outer peripheral edge are arranged towards the back side of the water purifier.

According to a preferred embodiment of the present invention, there is provided the water purifier, wherein a thickness of the circular-ring shaped stainless steel plate is in a range of between 0.5 and 1.0 mm.

According to a preferred embodiment of the present invention, there is provided the water purifier, wherein a portion of the raw water shower discharge port attached with the circular-ring shaped stainless steel plate is a separate member removable with respect to the main body.

According to a preferred embodiment of the present invention, there is provided a water purifier including a selection valve body with a camshaft and a plurality of selection valves, a selection lever connected to the camshaft, a ratchet mechanism or a one-way clutch mechanism for transmitting the rotational operation of the selection lever to the camshaft, and a return spring for returning the selection lever to an original position; wherein the selection lever is arranged facing upward or downward at the side of the water purifier, rotated to the back side by a pushing operation or the front side by a pulling operation, and automatically returned to the original position facing upward or upward by the return spring after the rotation.

According to a preferred embodiment of the present invention, there is provided the water purifier, wherein a connection tube is arranged at an end of the camshaft coupled with the selection lever, a locking rib for preventing slip-out is arranged at an outer periphery of the connection tube, and an indication member for indicating a water discharge state is arranged on an outer peripheral side of the connection tube.

According to a preferred embodiment of the present invention, there is provided the water purifier, wherein a ratchet teeth and a ratchet pawl receiving portion for engaging with a ratchet pawl member configuring the ratchet mechanism are arranged on an inner side of the connection tube and the end of the camshaft coupled with the connection tube, respectively.

According to a preferred embodiment of the present invention, there is provided the water purifier, wherein the selection valve body is arranged with two ribs so as to cover the coupling portion of the camshaft and the selection lever, the portion corresponding to the indication member for indicating the water discharge state being arranged between a gap where the two ribs are not present.

According to a preferred embodiment of the present invention, there is provided the water purifier, wherein the locking rib arranged at the outer periphery of the connection tube of the selection lever rotates along the ends of the two ribs.

According to a preferred embodiment of the present invention, there is provided the water purifier, wherein a spring receiving portion is arranged so as to project from the locking rib arranged at the outer periphery of the connection tube of the selection lever, the spring receiving portion being contacted to one of the two ribs to determine the rotation range by the rotational operation of the selection lever.

According to a preferred embodiment of the present invention, there is provided the water purifier, wherein a spring accommodating portion is arranged on the rear surface side of the selection valve body.

According to a preferred embodiment of the present invention, there is provided the water purifier, wherein the raw water feeding pipe for feeding the raw water to the filter cartridge attached to the water purifier main body is connected to the downstream side of the selection valve body, and a fit-in portion for connection of the raw water feeding pipe is arranged on a rear surface side of the selection valve body, the fit-in portion being arranged with a fixation rib for fixing the raw water feeding pipe.

According to a preferred embodiment of the present invention, there is provided the water purifier, wherein the raw water feeding pipe includes a first end to be connected to the selection valve body and a second end for connecting the filter cartridge, a rotation shaft for supporting a water wheel for flow rate detection is arranged inside the raw water feeding pipe, and an engagement portion for engaging with the fixation rib of the selection valve body is arranged at the first end.

According to another preferred embodiment of the present invention, there is provided a water purifier including a main body internally incorporating a selection valve and a filter cartridge removably attached to the main body; wherein a resin body configuring the main body is formed with an application film made of transparent resin material including fluorocarbon resin or silicone resin on an outer surface.

According to a preferred embodiment of the present invention, there is provided the water purifier, wherein the application film is a film formed by applying an adhesive augmenting agent to the outer surface of the resin body and then applying the transparent resin material thereto.

According to a preferred embodiment of the present invention, there is provided the water purifier, wherein the application film is a film formed by applying and reaction-curable a fluorine or silicone reaction-curable material containing catalytic agent.

According to a preferred embodiment of the present invention, there is provided the water purifier, wherein the catalytic agent contained in the reaction-curable material is one of dibutyl tin, aluminum complex, zirconium complex, and titanium oxide.

According to a preferred embodiment of the present invention, there is provided the water purifier, wherein a thickness of the application film is between 10 and 30 µm.

### Effect of the Invention

According to a structure of the water purifier according to one embodiment of the present invention, the water distribution shape of the shower water becomes even and satisfactory without inhibiting the compactness of the water purifier.

According to the water purifier according to one embodiment of the present invention, even if the portion of the shower discharge hole of the small water purifier to be directly connected to the faucet, the stainless steel plate can be fixed so as not to be rotated when integrally molded with resin by forming a cutout at the outer periphery of the stainless steel plate. When sandwiching the stainless steel plate by arranging a rib for directly connecting the peripheral edge of the straight discharge port formed at substantially the middle of the stainless steel plate and the outer periphery of the stainless steel plate, the stainless steel plate can be more strongly fixed. Furthermore, when the rib is arranged towards the back side of the water purifier, the shower appears to be uniformly discharged to the user. In addition, the shower hole can be processed such that the direction and the size of the hole are uniform. Deformation is less likely to occur in time of molding and in time of use by having the plate thickness to between 0.5 and 1.0 mm. Moreover, as the shower discharge port attached with the stainless steel plate is detachable to the main body, a water purifier in which the shower discharge port can be detached and easily cleaned when stain attaches thereto can be provided.

According to the water purifier according to one embodiment of the present invnetion, the selection lever extends substantially upward or downward at the initial position, and the selection lever can be rotated with a light one-touch operation, whereby the lever operability and the operation feeling improve, and the load on the water line faucet in time of lever operation can be alleviated.

According to the water purifier of one embodiment of the present invention, the outer surface of the body is applied with hard resin of high water repelling property, and thus the splashed water can be repelled from the outer surface of the water purifier, and a clean state without attachment of stain can be maintained over a long period of time.

### BRIEF DESCRIPTION OF THE DRAWINGS

Fig. 1 is a front view of a water purifier showing one embodiment of the present invention;
Fig. 2(1)(a) is a longitudinal cross-sectional view of the water purifier shown in Fig. 1;
Fig. 2(2)(b) is a side view of a camshaft shown in Fig. 2, Fig. 2(c) is a longitudinal cross-sectional view of each cam arranged in the camshaft shown in Fig. 2, and Fig. 2(d) is a front view of a valve element shown in Fig. 2;
Fig. 3 is a right side cross-sectional view of the water purifier shown in Fig. 1;
Fig. 4(a) is a right side view of a selection valve body, Fig. 4(b) is a cross-sectional view taken along A-A of the selection valve body shown in Fig. 4(a), and Fig. 4(c) is a cross-sectional view taken along B-B of the selection valve body shown in Fig. 4(a);

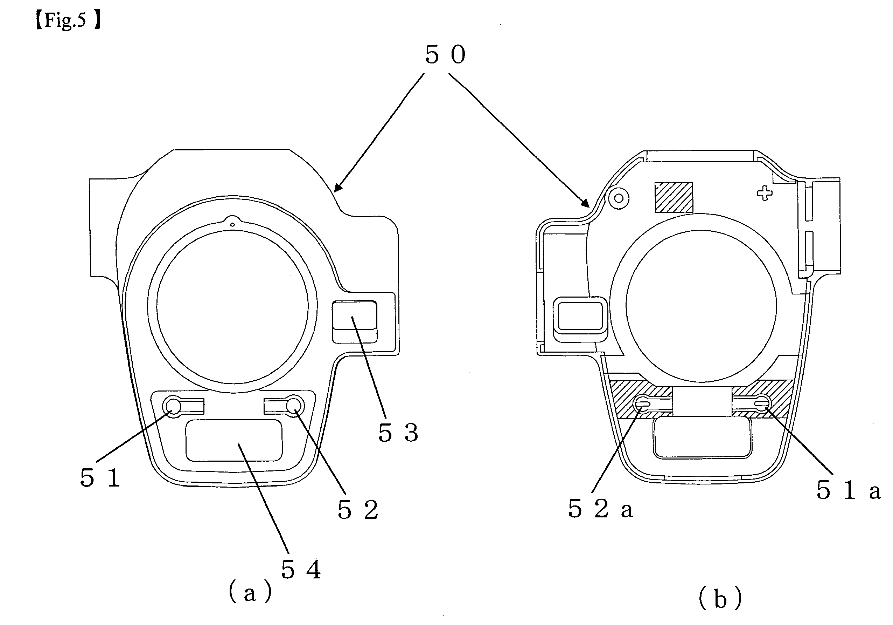

Fig. 5(a) is a top view of an upper body and Fig. 5(b) is a bottom view of the upper body;
Fig. 6(a) is a top view of a lower body and Fig. 6(b) is a schematic cross-sectional view showing another mode of the lower body;
Fig. 7 is a top view of a stainless steel plate;

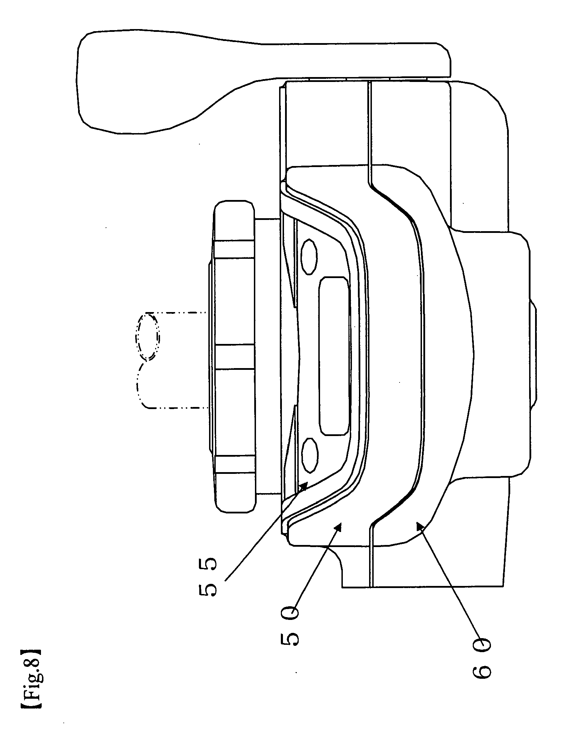

Fig. 8 is a front view of a water purifier showing one embodiment of the present invention;
Fig. 9(a) is a top view of a rectifier plate, and Fig. 9(b) is a longitudinal cross-sectional view of the rectifier plate of Fig. 9(a);
Fig. 10 is a longitudinal cross-sectional view of the raw water feeding pipe;
Fig. 11 (a) is an exploded perspective view of a water wheel, and Fig. 11 (b) is an exploded perspective view of a flow rate detector;
Fig. 12 is an exploded perspective view of a power supply unit;
Fig. 13 is an upper cross-sectional view of a main body of a water purifier including the water wheel and the flow rate detector;
Fig. 14(1)(a) is a front view of a display unit, Fig. 14(b) is a cross-sectional view taken along A-A of Fig. 14(a), and Fig. 14(c) is a cross-sectional view taken along B-B of Fig. 14(a);
Fig. 14(2)(d) is a front view of a liquid crystal display unit; and
Fig. 15 is a cross-sectional view of a cartridge.

### Description of symbols

1: water purifier
2: main body
3: filter cartridge
4: faucet
10: raw water inflow port
11: packing
12: adapter13: attachment nut
14: water flow buffering member
20: selection valve body
21: raw water shower introduction port
22: raw water stream introduction port
23: cartridge water feeding port
23a: fit-in portion
23b: fixation rib
23c: water wheel fixation shaft
24a, 24b, 24c: sheet surface
25a: first rib25b: second rib
26: opening27: gap
28: spring case29: ball receiving portion
30: valve element
30a: link30b: packing31: valve element
31 a: link31 b: packing
32: valve element
32a: link32b: packing40: camshaft41, 42, 43: cam44: ratchet pawl receiving portion
44a: gap
45: ball receiving groove
46: ball
47: spring
50: upper body
51: first switch operating portion
51 a: projection (back side)
52: second switch operating portion
52a: projection (back side)
53: opening54: opening55: seal60: lower body60a: discharge member
61: operation stopper62: stainless steel plate
63a: shower discharge hole63b: stream discharge hole
64: cutout65: supporting beam
66: raw water stream discharge port
67: raw water shower discharge port
68: rectifier plate
68a: attachment rib68b: water flow hole
70: selection lever
71: locking rib
72: ratchet teeth73: spring receiving portion
74: connection tube
75: grip
79: lever cap
80: return spring90: ratchet pawl member
100: indication ring110: raw water feeding pipe
111: raw water take-out port
112: engagement portion113: rotation shaft
114: bayonet connecting portion
120: flow rate detector
121: magnetic switch
122: magnetic switch holder123: curable resin 130: water wheel
131: shaft portion132: blade
133: rotation shaft holel134: magnet attachment hole135: curable resin
136: magnet140: power supply unit
141: battery
142: battery cover
143a: anode fitting
143b: cathode fitting
144: battery holder
145: battery attachment portion
146: O-ring
147: cutout148: recess
149: rubber cap
150: display unit
151: circuit board
152: board holder
153: frame for circuit board154: curable resin
155: reset button156: cartridge select button
157, 158: elastic film (switch rubber)
159a, 160a: fixation frame
159b, 160b: ultrasonic welding portion
170: liquid crystal display unit
171: filter cartridge replacement indication element172: battery replacement indication element173: cartridge type indication element
201: case202: cylindrical projection203: raw water receiving port204: purified water discharge port
205: cylindrical member
206: O-ring207: primary filter
208: secondary filter
209: hollow fiber bundle
210: curable resin
211: adsorbent layer212: transparent cap213: bayonet connecting portion
214: cap

### BEST MODE FOR CARRYING OUT THE INVENTION

One preferred embodiment of the water purifier of the present embodiment will be described below using drawings. It should be noted that the present embodiment is not particularly limited by these drawings.

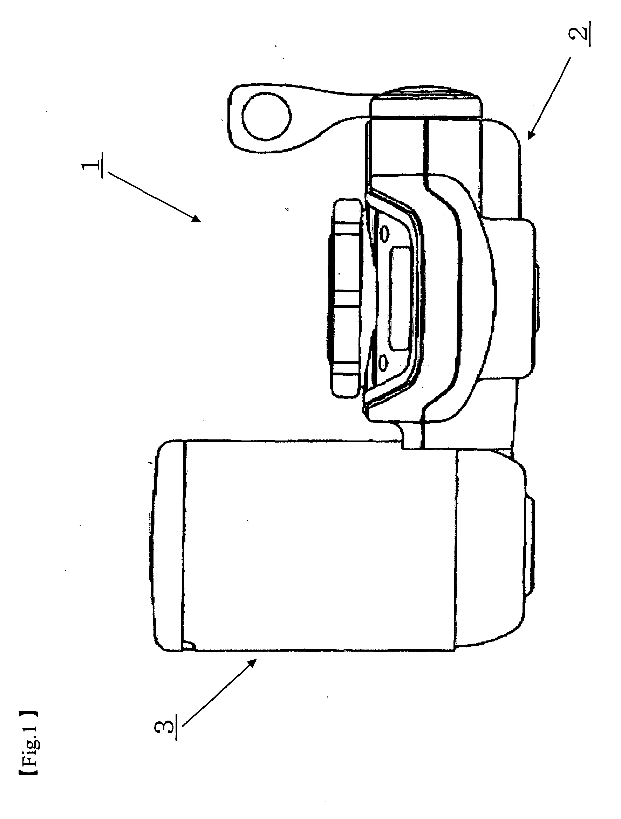

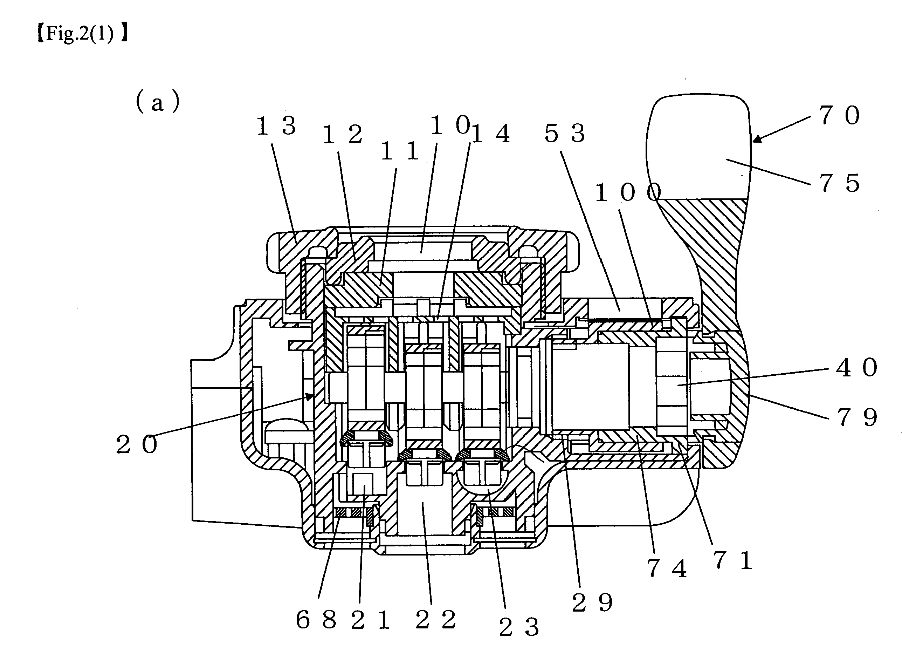

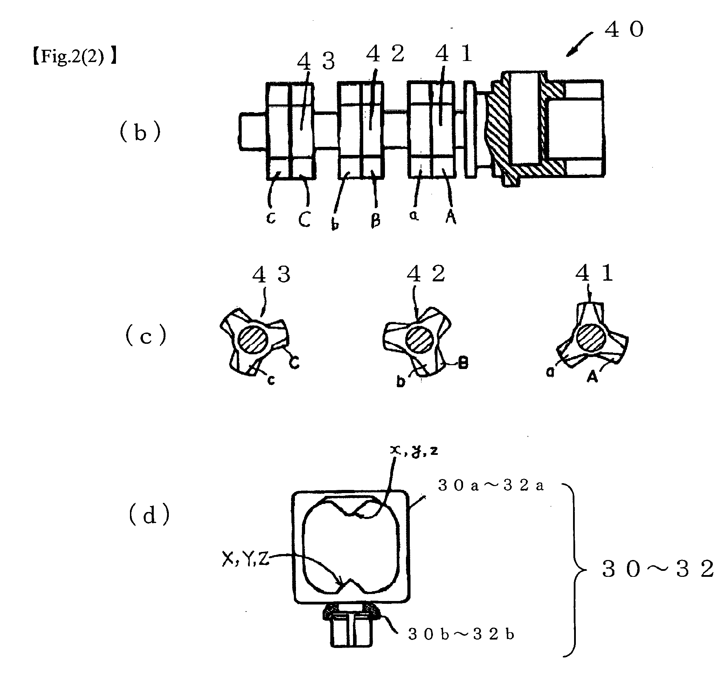

The water purifier of the present embodiment is a direct faucet mount type water purifier attached and fixed to a faucet in a kitchen etc. of a house, and is configured by a main body 2 internally incorporating a selection valve body 20, a filter cartridge 3 accommodating a filter media, and the like, as shown in Fig. 1 and Fig. 2. Three types of discharge mode of (1) "raw water shower" mode of discharging the raw water flowed in from the faucet 4 through a raw water inflow port as a shower water, (2) "raw water stream" mode of discharging as straight water, and (3) "purified water" mode of supplying the raw water to the filter cartridge 3 are sequentially selected by operating a selection lever 70 arranged at the side of the main body 2. The raw water supplied to the filter cartridge 3 is filtered by an adsorbent such as activated carbon , hollow fibers, and the like, and discharged from a purified water discharge port 204 as purified water.

The main body 2 will be described first.

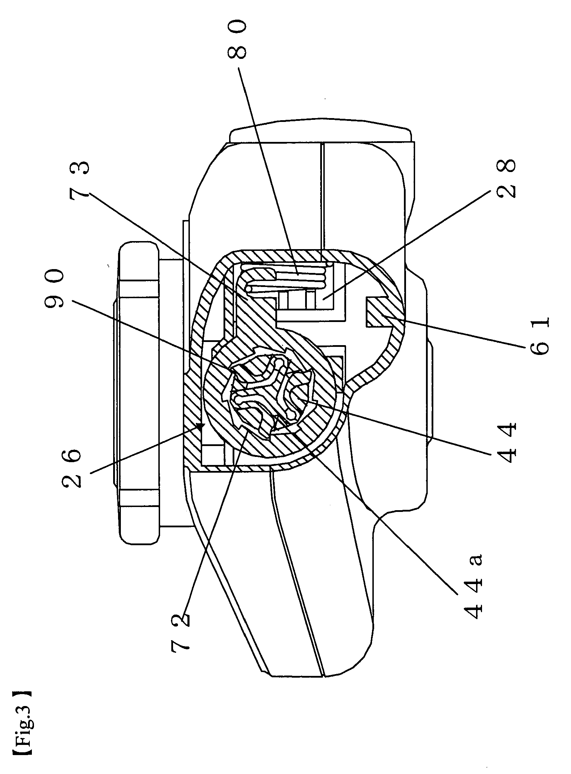

As shown in Fig. 2 and Fig. 3, the main body 2 is arranged with the selection valve body 20 incorporating a camshaft 40 and a plurality of selection valves, the selection lever 70 coupled to the camshaft 40, a ratchet mechanism or a one-way clutch mechanism for transmitting the rotational operation of the selection lever to the camshaft, and a return spring 80 for returning the selection lever to an original position. Three valve elements 30, 31, 32 are arranged as a plurality of selection valves. Furthermore, a lower body 60 including a raw water stream discharge port 66 and a raw water shower discharge port 67; an upper body 50 including an opening having the selection valve body 20 projecting at the upper surface; a raw water feeding pipe 110 connected to the selection valve body 20 and incorporating a flow rate integrating unit; a liquid crystal display unit 170 for displaying the result of integrating the flow rate, and the like are also arranged.

A raw water inflow port 10 is arranged at the upper part of the selection valve body 20, a ring-shaped packing 11 is attached at the periphery thereof, an attachment nut 13 is screwed together with the selection valve body 20 sandwiching an adapter 12 screwed into the male screw portion of the faucet 4, and the main body 2 is attached, supported and fixed to the faucet 4. A water flow buffering member 14 is sandwiched on the upstream side of the valve elements 30, 31, 32 so that the valve elements 30, 31, 32 do not move by the water pressure of the raw water flowing in through the raw water inflow port 10. The adapter 12 may also be formed to a hollow disc-shape having a cutout to be sandwiched at the distal end of the faucet 4 other than being screwed into the male screw portion of the faucet 4.

A structure of the discharge mode selection mechanism by the selection valve will be described below.

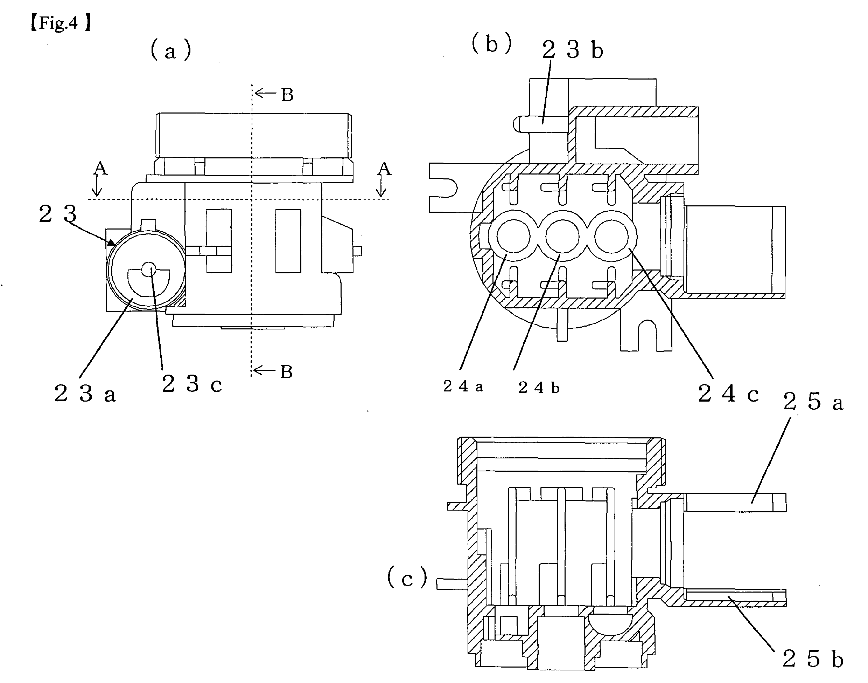

As shown in Fig. 4, the selection valve body 20 is arranged on the downstream side of the raw water inflow port 10 at the upper part of a substantially cylindrical body, and is interiorly arranged with a space for accommodating a plurality of discharge ports 21, 22, 23 for distributing the flow of raw water and the valve elements 30, 31, 32 for blocking the discharge port. An opening 26 for receiving the camshaft 40 that switches the discharge port by activating links 30a, 31 a, 32a configuring the valve elements 30, 31, 32 up and down is also formed at the side surface. A ball receiving portion 29 for receiving a ball 46 arranged at the camshaft 40 is arranged at the outer periphery of the opening 26. Furthermore, two ribs 25a, 25b are arranged so as to surround the opening 26 formed at the side surface of the substantially cylindrical body. A spring case 28 for accommodating the return spring 80 for returning the position of the selection lever 70 is arranged at the rear surface of the substantially cylindrical body.

As shown in Fig. 2, the valve elements 30, 31, 32 are configured by the links 30a, 31 a, 32a and packing 30b, 31b, 32b. The links 30a, 31, 32a have a quadrilateral shape so that the camshaft 40, to be hereinafter described, can be inserted. The packing 30b, 31 b, 32b are attached to the lower side of the links 30a, 31 a, 32a, and have an umbrella shape of a type that blocks each discharge port 21, 22, 23 from above and that is raised (lifted) upward when opening the vale. Since the entire flowing hole can be covered in an umbrella form with respect to each discharge port 21, 22, 23, satisfactory sealability can be obtained.

As shown in Fig. 2, the camshaft 40 for moving the positions of the valve elements 30, 31, 32 is formed with three-strand cams 41, 42, 43 integrally formed with the camshaft 40. Each cam 41, 42, 43 is configured by a compound cam of a semicircular projection A, B, C in a case where the respective cam 41, 42, 43 pushes down each link 30a, 31 a, 32a, and projections a, b, c in a case of pushing up each link. In other words, the cam portions A, B, C contact the push-down surfaces X, Y, Z of the links 30a, 31a, 32a, and the projections a, b, c contact the push-up surfaces x, y, z and move the links 30a, 31 a, 32a up and down.

A ratchet pawl receiving portion 44 is arranged at the end of the camshaft 40 on the side for attaching the selection lever 70. In order for the camshaft 40 to reliably rotate without reverse rotating, and to provide a click feeling when operating the selection lever, a so-called click mechanism is arranged which is configured such that a spring 47 and a ball 46 biased by the spring 47 are arranged in a ball receiving groove 45 at one part of the camshaft 40, and the ball 46 is received in the ball receiving portion 29 of the same pitch as a ratchet teeth 72 formed at the selection lever 70.

The selection lever 70 is coupled to the end of the camshaft 40. A connection tube 74 is arranged at the output periphery of the end of the camshaft by fit-in, where the selection lever 70 extends in a perpendicular direction from the end of the connection tube 74. A grip 75 is arranged at the distal end side of the selection lever 70. A spring receiving portion 73 for accommodating the return spring 80 for returning the selection lever 70 to the original position is arranged on the rear surface side of the main body. A locking rib 71 for preventing slip-out is arranged in a circular ring shape at the outer periphery of the connection tube 74. The ratchet teeth 72 configuring the ratchet mechanism is arranged on the inner side of the connection tube 74.

The return spring 80 is accommodated in the spring case 28 of the selection valve body with both ends of the spring wounded to a coil-shape for a plurality of times slightly extended, where one extended end is locked to a cutout portion of the spring receiving portion 73 integrally arranged with the selection lever 70. The coil portion of the return spring 80 compresses when the selection lever 70 is pushed in, and the selection lever 70 returns to the original position by the counteraction force of the return spring 80 when the selection lever 70 is released.

An indication ring 100 serving as an indication member for indicating the water discharge state is arranged on the outer periphery side of the connection tube 74. The indication ring 100 has a hollow cylindrical shape, where display indicating the discharge state such as "raw water", "shower", "purified water", and the like is described on the surface. Furthermore, a cylindrical rib (not shown), which is one size smaller than the hollow cylinder having a cutout, is attached to the indication ring, where such cutout fits in with the projection raised at the periphery of the ball receiving groove 45 of the camshaft 40 so that the rotation of the camshaft 40 is also transmitted as is to the indication ring 100, and the indication ring 100 simultaneously rotates with the camshaft 40.

The selection valve body 20, the valve elements 30, 31, 32, the camshaft 40, the selection lever 70, and the indication ring 100 are preferably resin molded bodies using ABS (Acrylonitrile Butadiene Styrene) that can be accurately and inexpensively processed, but are not particularly limited, and AS (Acrylonitrile Styrene) resin, POM (Polyoxymethylene, polyacetal) resin, and the like that can achieve the same accuracy and strength as the ABS resin may be suitably used.

A structure of the assembled selection valve will be described below.

As shown in Fig. 2, the valve elements 30, 31, 32 are accommodated inside the selection valve body 20, and the camshaft 40 is inserted from the opening 26 formed at the side surface. Each cam 41, 42, 43 arranged at the camshaft 40 corresponds to the positions of the accommodated valve elements 30, 31, 32. The ball 46 and the spring 47 are accommodated in the ball receiving groove 45 in the camshaft 40, and contact the ball receiving portion 29 arranged at the outer periphery of the opening 26 of the selection valve body 20.

The connection tube 74 and the indication ring 100 are arranged at the outer periphery of the end of the camshaft 40 fitted in and connected with the selection lever 70. The cutout of the cylindrical rib attached to the indication ring 100 fits in with the ball receiving groove 45 of the camshaft 40, so that the indication ring 100 rotates with the camshaft. The display of "raw water", "shower", and "purified water" described on the surface of the indication ring 100 is such that only one type corresponding to the operation of the selection lever 70 can be seen from a gap 27 (indication portion) of two ribs 25a, 25b arranged at the selection valve body 20. The gap 27 is arranged in correspondence to the opening 53 of the upper body 50.

As shown in Fig. 4, the two ribs 25a, 25b arranged at the selection valve body 20 project substantially parallel to the camshaft 40 so as to surround the opening 26 for receiving the camshaft 40 where the ends are arranged to cover the coupling portion with the selection lever 70. The externally indicating portion (indication portion) of the indication ring 100 is the gap 27 (indication portion).

The selection lever 70 connected to the end of the camshaft 40 has the grip 75 facing substantially perpendicularly upward from the connection tube 74. Here, the return spring 80 is accommodated in the spring case 28 of the selection valve body 20, and one end of the return spring 80 in the extended state is accommodated in the spring receiving portion 73 attached to the selection lever 70.

Furthermore, a ratchet pawl member 90 is fitted in and fixed to the ratchet pawl receiving portion 44 arranged at the end of the camshaft 40. A lever cap 79 is further fitted in and fixed to the selection lever 70 so that the ratchet pawl member 90 does not project outward.

As shown in Fig. 2, each cam 41, 42, 43 arranged in the camshaft 40 is equally arranged by three in the peripheral direction of the camshaft 40, and the phase of each cam 41, 42, 43 is shifted by 40 degrees with respect to each other in the peripheral direction of the camshaft 40. The position in the axial direction of the camshaft 40 of each cam 41, 42, 43 corresponds to the position of the valve elements 30, 31, 32 arranged so as to open and close each mode flowing port and in a contactable manner to the sheet surfaces 24a, 24b, 24c of each flowing port.

The reciprocating direction of the selection lever 70 is preferably in a direction of pushing to the far side with the position where the grip 75 of the selection lever 70 is facing substantially perpendicularly upward as a stop position, but may be in a direction of pulling to the near side. The selection lever 70 rotates by one stroke in the direction defined in advance by the pushing operation to the back side or the device that pulls to the front side. It automatically returns to the original position after the rotation. Therefore, by setting the reciprocating direction of the selection lever 70 to the direction of pushing to the far side, selection can be performed with an extremely simple and light operation since the selection lever 70 merely needs to be pushed by one stroke towards the far side in the selecting operation. In particular, if the distal end of the selection lever 70 is facing substantially upward, the selecting operation of one stroke can be performed by simply pushing the distal end of the selection lever with one finger.

The grip 75 of the selection lever 70 may be facing substantially perpendicularly downward other than facing substantially perpendicularly upward. The position of the faucet may vary, and the faucet may be arranged, in particular, at a high position that is hard to reach, or if there is not a sufficient space for operation at the upper part of the faucet, the grip 75 is preferably facing substantially perpendicularly downward so as to be more easily operable.

A selecting mechanism of the selection valve assembled as above will now be described.

The embodiment described below shows an example in which the camshaft 40 rotates by 40 degrees with one operation of the selection lever 70, that is, the camshaft 40 rotates once with nine operations of the selection lever 70, and "purified water", "raw water", and "shower" switch nine times.

When the user pushes the grip 75 of the selection lever 70 to the back side, the spring receiving portion 73 of the selection lever 70 rotates until contacting the operation stopper 61 arranged at the lower body 60. The rotating operation of pushing the selection lever 70 to the back side is transmitted as the rotating operation of one pitch to the cam shaft 40 through the ratchet pawl member 90 connected to the end of the camshaft 40 by the ratchet teeth 72 having the supporting point of rotation of the selection lever 70 as the center formed on the inner side of the connection tube 74 of the selection lever 70. A normal structure may be adopted for the ratchet mechanism including the ratchet teeth 72 and the ratchet pawl member 90.

When the hand is released from the selection lever 70 after the operation, the selection lever 70 returns to the initial position by the return spring 80. In this case, the initial position does not shift since the spring receiving portion 73 of the selection lever 70 contacts the first rib 25a arranged at the selection valve body 20.

When the selection lever 70 returns to the initial position, the pawl of the ratchet pawl member 90 engages and rotates with the ratchet teeth 72 in the rotating direction by the pawl of the ratchet pawl member 90 elastically displaceable to the gap 44a side of the ratchet pawl receiving portion 44, but the pawl of the ratchet pawl member 90 contracts by the spring action in the gap 44a of the ratchet pawl receiving portion 44 when the selection lever 70 returns, disengages with the ratchet teeth 72 and idles, and only the selection lever 70 returns to the initial position. Therefore, the movement (actuation force) of the selection lever 70 is intermittently transmitted to the camshaft 40 only in one rotating direction through the ratchet mechanism, and the camshaft 40 is rotated only in one direction for every operation of the selection lever 70. At the same time, the indication ring 100 also rotates only in one direction for every operation of the selection lever 70.

Such transmission mechanism is also achieved by the normal one-way clutch mechanism in addition to the ratchet mechanism described above.

Since each cam 41, 42, 43 of the camshaft 40 is inserted to the corresponding quadrilateral link 30a, 31 a, 32a, when the camshaft 40 rotates by one pitch of the ratchet teeth 72, one valve element of the valve elements 30, 31, 32 is pushed up through the engagement with each link 30a, 31 a, 32a and the remaining two valve elements are pushed down.

The packing 30b, 31 b, 32b attached to the valve elements 30, 31, 32 have an umbrella shape, and thus the entire flowing hole of each discharge port 21, 22, 23 can be covered in an umbrella form, and satisfactory sealability can be obtained. Furthermore, since factors that increase the driving force with the friction force by the fit-in of the O-ring do not exist compared to the O-ring attached valve element, it can be driven with a significantly small force, and ultimately contributes to great reduction in the operation force of the selection lever.

When driving the valve elements 30, 31, 32 using the camshaft 40, the cam of the camshaft may be directly engaged to the valve element, but the valve element may be driven through a link such as a gear that can be engaged to the camshaft. This is also a preferred mode in that a smoother operation can be obtained.

The valve element operation amount per one operation of the selection lever 70 needs to be corresponded to the amount of phase shift of each cam of the camshaft. The cam corresponding to each valve element may not necessarily be one, and a plurality of cams may be arranged in the circumferential direction of the camshaft with respect to one valve element. Thus, the corresponding valve element can be driven every time each cam arranged in the circumferential direction reaches the predetermined position. The rotation amount of the camshaft per one operation of the selection lever 70 needs to comply with such condition, and is 360 degrees/(integral multiples n of number of discharge modes). The value of n may be one, but the value of n is two or three to suppress the necessary rotation amount small, suppress one operation amount of the selection lever small, and further enhance the operability. The value of n may be about five, but the reliability of selection is adversely affected if too large. In the water purifier according to the present embodiment, the selection lever operation is merely pushing or pulling constantly in constant direction, and is unconditionally operated by a predetermined stroke, and thus fine tuning, checking of the operation amount, and the like are unnecessary, and selection can be performed with an extremely easy operation. Furthermore, operation is performed by a constant stroke for every operation, and thus elements that cause error in the operation amount do not exist and the reliability of the operation is extremely high. Furthermore, since the selection lever is automatically returned to the original position, the operation in selection is a light one-touch operation.

The lower body 60 will be described below.

The lower body 60 is arranged with a raw water discharge port corresponding to the raw water shower introduction port 21 and the raw water stream introduction port 22 arranged in the selection valve body 20. A raw water stream discharge port 66 perforated with a straight discharge hole 63b for straightly discharging the raw water is arranged at substantially the center of the raw water discharge port, and a raw water shower discharge port 67 perforated with a great number of shower discharge holes 63a for discharging in a shower form and having a hole thickness of L is arranged at substantially the circular ring part of the peripheral edge. As described below, the raw water shower discharge port 67 is preferably made of stainless steel plate, but may be made of resin perforated with great number of shower discharge ports 63a and having a hole thickness of L, and the raw water shower discharge port 67 made of resin may be integrally configured with the main body 60.

The raw water stream introduction port 22 arranged in the selection valve body 20 and the raw water stream discharge port 66 arranged in the lower body 60 are arranged on substantially coaxial extension line, and thus the raw water can be uniformly discharged perpendicularly downward.

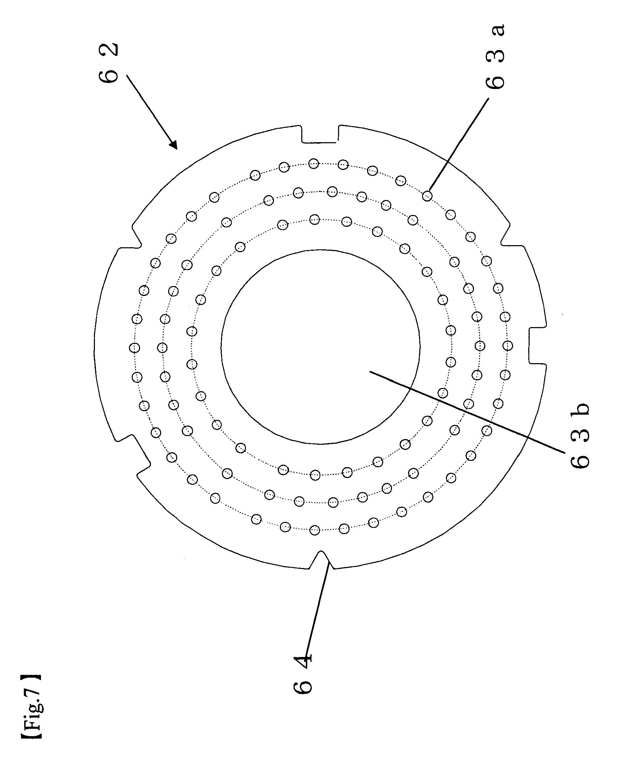

The raw water shower discharge port 67 arranged at the lower body 60 is arranged at the substantially circular ring part on the peripheral edge side of the raw water discharge port, and great number of shower discharge holes 63a are perforated in the circular ring shaped stainless steel plate 62. The inner peripheral edge and the outer peripheral edge of the circular ring shaped stainless steel plate 62 are integrally molded so as to be sandwiched by the resin of the lower body 60. As shown in Fig. 7, a plurality of cutouts 64 is formed at the outer peripheral edge of the stainless steel plate 62, and the stainless steel plate 62 after integrally molded is prevented from rotating or detaching in the lower body. Two supporting beams (ribs) 65 connected to the inner peripheral edge and the outer peripheral edge are arranged to securely fix the stainless steel plate 62 to the lower body, thereby supporting and fixing the stainless steel plate 62. The number of supporting beams 65 is not particularly limited, but the number of shower holes 63a reduces as the number of supporting beams increases and shower becomes difficult to be uniformly discharged, and thus about one to three supporting beams are preferable. The position of arranging the supporting beam 65 is also not particularly limited, but the supporting beam 65 is preferably equally arranged to obtain uniform shower. If the supporting beam 65 is arranged on the back side, the user operating the water purifier 1 from the front surface side may not notice that the shower discharge hole is not formed at the portion of the supporting beam, and the shower appears to be uniformly discharged.

If stainless steel having rust resistance ability of greater than or equal to SUS304 is used for the stainless steel plate 62, it does not rust for more than a few years even when contacting the water of the water line, and thus can be cleanly used in the kitchen and the like. If the plate thickness of the stainless steel plate 62 is about 0.3 to 1.0 mm, and the diameter of the shower discharge hole 63a is about 0.5 to 1.0 mm, the pressure loss of the shower discharge hole 63a can be reduced. The perforation processing of the shower discharge hole 63a becomes difficult if the plate thickness (equal to hole thickness L of shower discharge hole 63a) is greater than or equal to 1.0 mm, and flatness becomes difficult to maintain if smaller than 0.3 mm. More preferably, if the plate thickness is 0.6 mm and the hole diameter of the shower discharge hole is 0.8 mm, uniform shower discharge can be realized while reducing the pressure loss. The hole thickness L of the shower discharge hole 63a is desirably smaller than or equal to 1 mm even when the raw water shower discharge port 67 is made of resin.

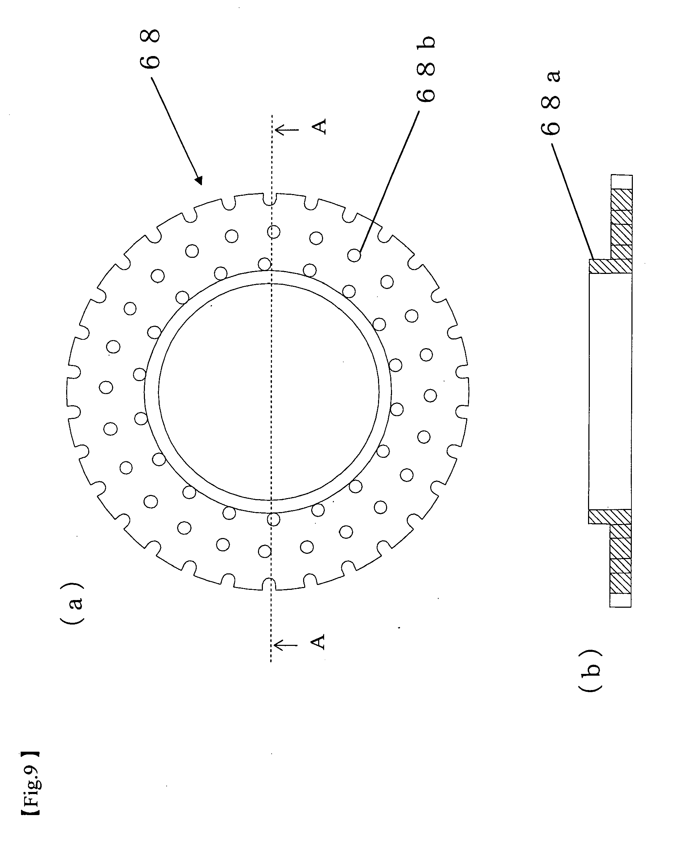

The raw water shower introduction port 21 arranged in the selection valve body 20 discharges only to one portion of the circular ring part of the stainless steel plate 62, and thus the raw water may not be uniformly discharged from the shower discharge hole 63a when the water pressure of the raw water is high or great amount of water stream is flowed. A rectifier plate 68 is thus arranged in a space between the raw water introduction port 21 arranged in the selection valve body 20 and the stainless steel plate 62 to uniformly feed the water to the stainless steel plate 62, whereby the discharging direction of the shower becomes constant and the shower uniformity is enhanced. The raw material of the rectifier plate 68 is not particularly limited but ABS resin and AS resin and the like, which can be accurately processed, are preferable. As shown in Fig. 9, the rectifier plate 68 has a substantially disc-shape formed with a plurality of water flow holes, where the straight introduction port is formed at substantially the middle so as to be fitted to the raw water stream discharge port 66 formed in the lower body 60, and a cylindrical rib 68a is raised at the periphery of the straight introduction port to be fitted and fixed to the raw water stream discharge port 66, and the circular ring part is arranged at the peripheral edge. Great number of water flow holes 68b are perforated in the circular ring part and the outer peripheral edge of the circular ring part is substantially fitted into the inner surface of the lower part of the selection valve body 20 as shown in Fig. 2(a), and thus pressure loss occurs in the raw water flowing into the great number of water flow holes 68b, the raw water can be uniformly supplied in the peripheral direction and the radial direction of the rectifier plate 68, and the raw water can be supplied in the uniform state to the shower discharging stainless steel plate 62 through the great number of water flow holes 68b. Forming the hole diameter of the water flow hole 68b larger than the shower discharge hole 63a arranged in the stainless steel plate 62 is preferable in that the raw water supplied to the shower discharge hole 63a can be uniformed. For instance, if the diameter of the shower discharge hole 63a of the stainless steel plate 62 is about 0.5 to 1.0 mm, the diameter of the water flow hole 68b of the rectifier plate 68 is preferably about 0.55 to 2.0 mm. The present embodiment is preferable in that when the sum of the area of the great number of water flow holes 68b of the rectifier plate 68 at the rectifier surface of the rectifier plate 68 is made larger than the sum of the area of the shower discharge hole 63a formed in the stainless steel plate 62 at the shower discharge port surface of the shower discharge stainless steel plate 62, the raw water supplied to the shower discharge hole 63a can be more uniformed. For instance, the sum of the area of the great number of water flow holes 68b of the rectifier plate 68 at the rectifier surface of the rectifier plate 68 is 1.1 to 4.0 times and preferably 1.1 to 2.0 times the sum of the area of the shower discharge hole 63a formed in the stainless steel plate 62 at the shower discharge port surface of the stainless steel plate 62. Therefore, the size of the hole diameter is adjusted and the size of the sum of the area of the hole is adjusted to cause pressure loss in the raw water flowing into the shower discharge hole 63a by the configuration described above and the raw water is uniformly supplied in the peripheral direction and the radial direction of the stainless steel plate 62 to further uniform the raw water flowing out from the shower discharge hole 63a.

The rectifier surface of the rectifier plate 68 may be on the surface on the entrance side of the water flow hole 68b or may be on the surface on the exit side if the water flow hole 68b formed in the rectifier plate 68 is passing through the rectifier plate at the same hole diameter. However, the rectifier surface in a case where the water flow hole 68b of the rectifier plate 68 is tapered in a direction perpendicular to the rectifier plate 68 and passed through the rectifier plate at different hole diameters is preferably the surface on the side in which the area becomes a minimum. This is because the larger the pressure loss is, the smaller the hole diameter is. From such standpoint, in one rectifier plate 68, if the water flow holes 68b are oppositely tapered respectively, and the water flow hole of small hole diameter is at the surface on the entrance side of the water flow hole 68b or the water flow hole of small hole diameter is at the surface on the exit side, the smaller area of the respective surface is preferably adopted. This is the same for the stainless steel plate.

When the rectifier plate 68 is attached to the raw water stream discharge port 66 such that the tubular rib 68a is facing perpendicularly downward, this is preferable in that the raw water is more uniformly supplied to the rectifier plate 68 and discharged as uniform shower.

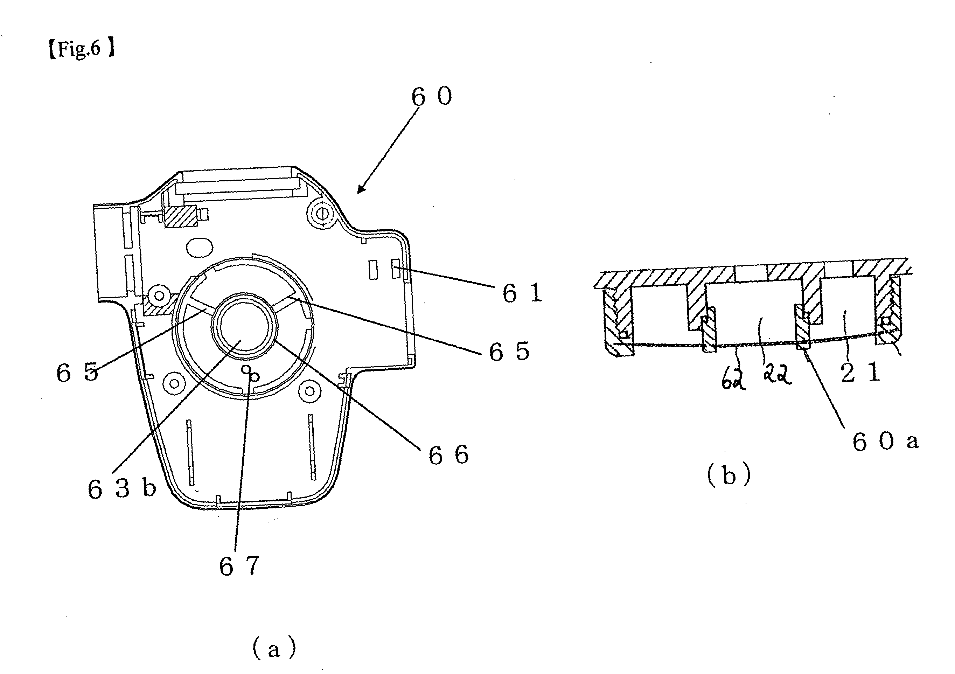

With respect to the portion of the raw water shower discharge port, a mode in which the lower body 60 and the stainless steel plate 62 are integrally molded has been described in Fig. 6, the discharge member 60a may be provided as a separate member enabling the peripheral part of the stainless steel plate 62 to be detachable. In this case, the lower body 60 and the discharge member 60a including the stainless steel plate 62 can use a known attachment method such as screw or bayonet connection. When the discharge member 60a detachable with the main body is arranged, if stain such as water stain attaches to the shower discharge hole 63a or the straight discharge hole 63b, the shower discharge hole 63a and the straight discharge hole 63b can be cleaned by detaching, and can be replaced with new ones.

Forming an application film made of transparent resin material on the outer surface of the resin body configuring the main body will be described above.

The main body is configured by the upper body 50 and the lower body 60, and the majority of it is made of resin molded article. In other words, the member configuring the outer side of the upper body 50 and the lower body 60 is mainly made of resin body. An application film made of transparent resin material including fluorocarbon resin or silicone resin is arranged on the outer surface of the resin body. The application film is a film formed by applying an adhesive augmenting agent to the outer surface of the resin body, and then applying and reaction-curing the fluorine or silicone reaction-curing material containing a catalytic agent such as dibutyl tin, aluminum complex, zirconium complex, and titanium oxide.

Prior to applying the transparent resin material, the usual primer agent is used for the adhesive augmenting agent as a basecoat on the outer surface of the resin body. The primer agent acts to roughen the resin outer surface, and increase the application surface area. As a result, the adhesiveness of the transparent resin material to apply next can be increased. The adhesive augmenting agent is not limited to the primer, and other known adhesive augmenting agents can be used.

In the present embodiment, the fluorocarbon resin or silicone resin excelling in water repelling property is used as the transparent resin for applying to enhance the water repelling property of the outer surface of the water purifier main body. Tetrafluoroethylene copolymer is an example of the fluorocarbon.

The catalytic agent contained in the fluorine or silicone reaction-curing material merely needs to have an effect of promoting the reaction and curing the applied material, and dibutyl tin, aluminum complex, zirconium complex, titanium oxide, and the like are suitably used. Among them, dibutyl tin is preferably used from the standpoint of the speed of curing and easiness in handling.

There is concern that when the thickness of the application film is too thin such as thinner than 10 µm, it may not be uniformly and sufficiently applied to the resin of the outer surface and a stripping due to use over a long period of time may occur. If the thickness is too thick as exceeding 30 µm, drawbacks such as hooking when fitting with another member occur. From such standpoint, the thickness of the application film is preferably in the range of between 10 and 30 µm.

The resin molded article made of resin such as ABS is greatly used for the body configuring the main body of the water purifier, but the water repelling property at the outer surface of the body is significantly enhanced by forming the transparent hard resin film through application to the outer surface of the main body, as described above. Therefore, even if the water purifier is used under an environment in which sewage water containing cleanser and the like splash and easily attach such as in the kitchen, the splashed water is repelled by the outer surface of the water purifier and is less likely to be attached, thereby preventing bacteria from growing and forming a stain layer, and a state without stain can be maintained over a long period of time.

An electrical component for integrating the flow rate and displaying the result will now be described.

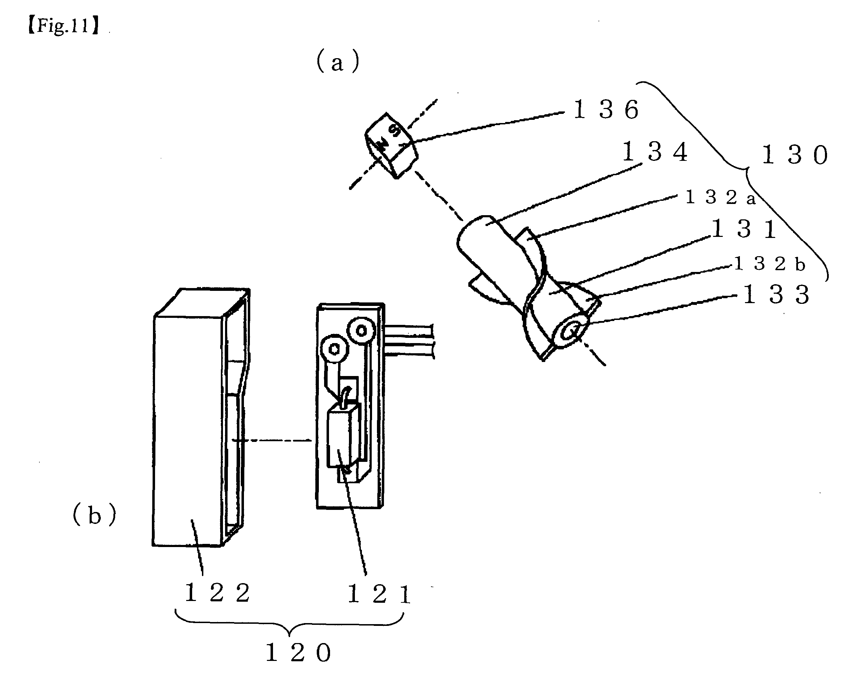

As shown in Figs. 11 to 14, the electrical component includes a flow rate detector 120, a water wheel 130, a power supply unit 140, a display unit 150, a liquid crystal display unit 170, and the like.

The flow rate detector 120 is arranged inside the raw water feeding pipe 110 flowing from the selection valve in the main body of the water purifier to the filter cartridge. As shown in Fig. 11, the flow rate detector 120 mainly includes a magnetic switch 121 that opens and closes according to the rotation of a magnet 136 arranged at the water wheel 130, to be hereinafter described, and a magnetic switch holder 122 for supporting and fixing the magnetic switch 121.

The water wheel 130 is formed with two blades 132a, 132b at a columnar shaft portion 131, where a rotation shaft hole 133 for receiving a rotation shaft 113 arranged inside the raw water feeding pipe 110 is formed at one end of the shaft portion 131 and a magnet attachment hole 134 for embedding the magnet 136 is formed at the other end.

The magnet 136 is inserted to the magnet attachment hole 134 such that a line connecting the N pole and the S pole and the rotation shaft of the water wheel 130 becomes perpendicular, and a plug member (not shown) is covered on and adhered or welded to the opening of the magnet attachment hole 134 to prevent the magnet from dropping and to prevent production of rust by contacting water. In order to prevent dropping of the magnet 136 and production of rust, the opening of the magnet attachment hole 134 is preferably sealed with a curable resin 135 (sealing material) after inserting the magnet 136 to the magnet attachment hole 134. Polyurethane resin and epoxy resin are used for the curable resin. To prevent rust of the magnet 136, the magnet itself may be coated. Ferrite magnet and the like may be used for the magnet 136 other than rare earth magnet having strong magnetic force.

The water wheel 130 configured as above is axially supported from the downstream side by the rotation shaft 113 so as to be rotatable in the raw water feeding pipe 110. The water wheel 130 may be an axial flow type in which the rotation shaft is parallel to the water feeding direction of the purifier water or may be that in which the rotation shaft is orthogonal thereto. Two blades are provided in the water wheel, but may be one or may be three or more.

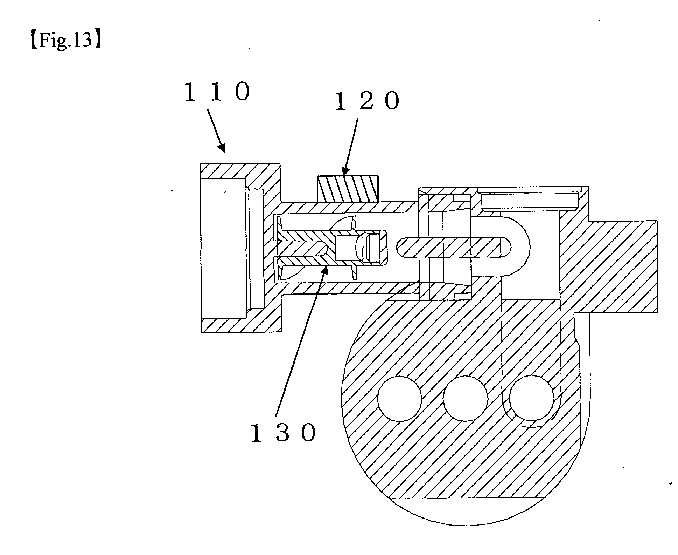

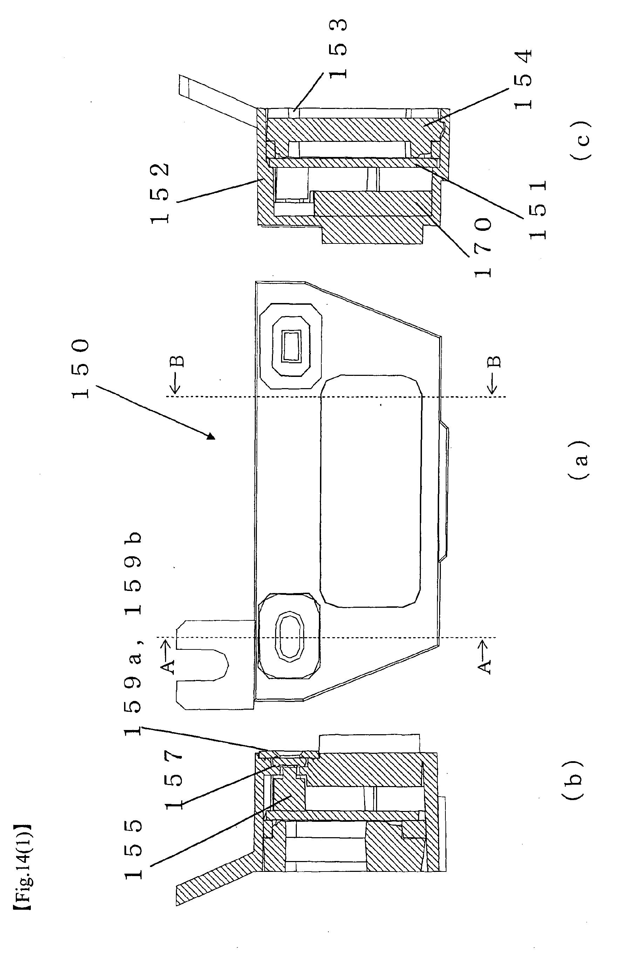

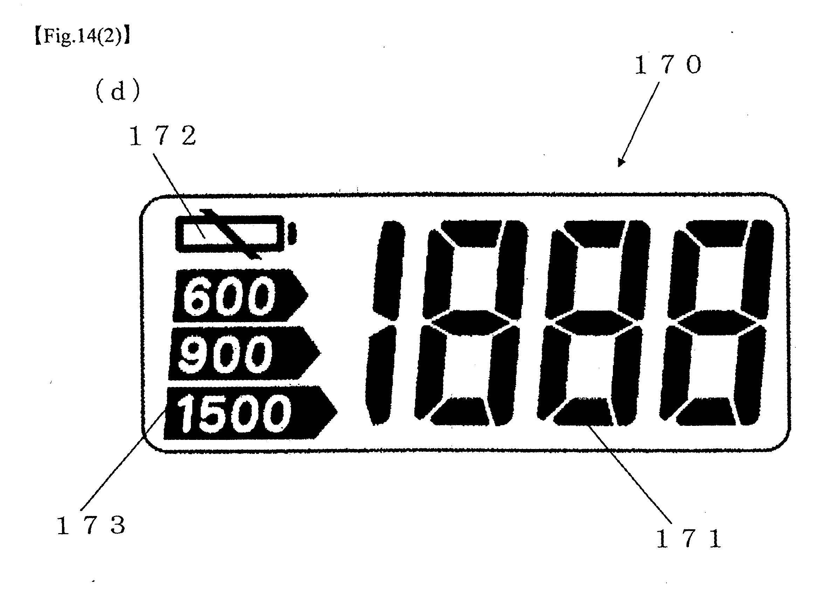

As shown in Fig. 11, the magnetic switch 121 is inserted to the magnetic switch holder 122, and sealed and fixed by the curable resin 123 (sealing material). The two terminals of the magnetic switch 121 are wire-connected with the display unit 150 shown in Fig. 14 by a lead wire (not shown), so that the pulse signal generated from the opening and closing of the magnetic switch 121 is transmitted to the display unit 150. The magnetic switch holder 122 accommodating the magnetic switch 121 contacts the outer periphery of the raw water feeding pipe 110 and is fixed in the vicinity of the water wheel 130, as shown in Fig. 13.

In the flow rate detector 120 configured as above, the water wheel 130 rotates when the raw water flows into the filter cartridge 3, whereby the magnet 136 embedded in the water wheel 130 rotates and the magnetic field changes accordingly. The magnetic switch 121 opens and closes twice when the magnet 136 makes one rotation, and as a result, the pulse signal of two cycles are generated and transmitted to the display unit 150.

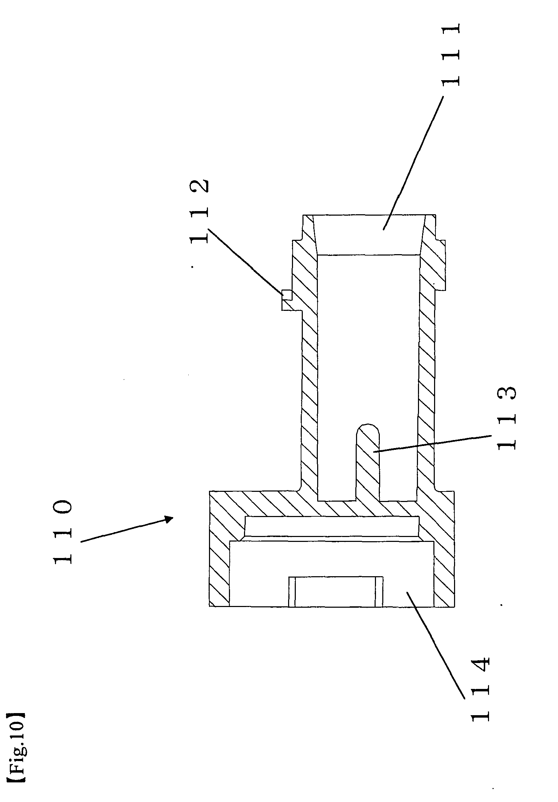

As shown in Fig. 10 and Fig. 13, the raw water feeding pipe 110 is configured so as to be fitted and fixed to the cartridge water feeding port 23 arranged at the side part on the back side of the selection valve body 20. A fixation rib 23b is arranged at a fit-in portion 23a of the cartridge water feeding port 23. An engagement portion 112 corresponding to the fixation rib 23b is arranged at a raw water take-out port 111 at the end of the raw water feeding pipe 110 to be fitted into the fit-in portion 23a, so that the raw water feeding pipe 110 does not rotate when replacing the filter cartridge 3 attached to a bayonet connecting portion 114 arranged at the other end of the raw water feeding pipe 110.

The rotation shaft 113 for supporting the water wheel 130 is arranged at substantially axis center of the raw water feeding pipe 110 in the cartridge water feeding port 23, and the water wheel 130 is fitted and fixed to the cartridge water feeding port 23 after being inserted to the rotation shaft 113. In this case, a water wheel fixation shaft 23c is arranged so that the water wheel 130 does not move in the interior of the raw water feeding pipe 110 at the cartridge water feeding port 23, and thus the water wheel 130 can rotate without moving by the flow of the raw water.

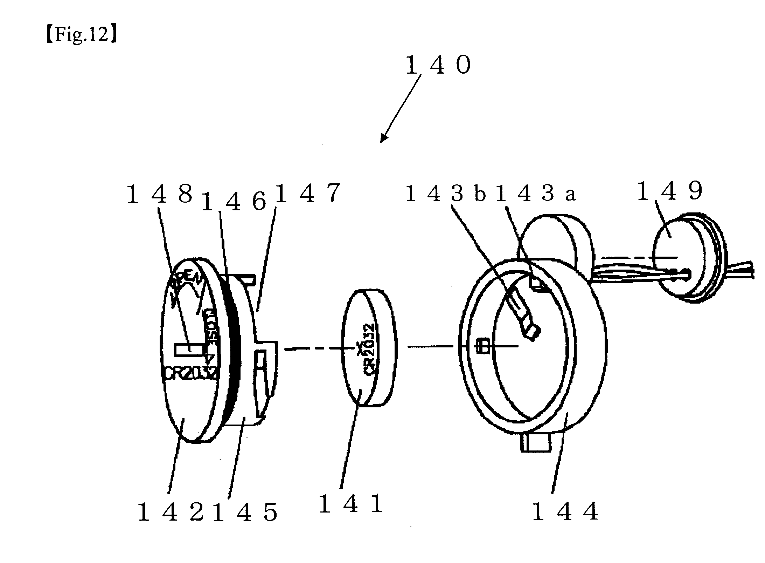

As shown in the exploded perspective view of Fig. 12, the power supply unit 140 is mainly configured by a battery holder 144 arranged in the main body 2, a coin-type lithium manganese dioxide battery 141 (hereinafter referred to as battery 141), a removable battery cover 142 for water tightly fixing the battery, an anode fitting 143a and a cathode fitting 143b arranged in the battery holder 144, and the like.

The battery cover 142 includes a tubular battery attachment portion 145 and an O-ring 146 at the outer periphery, where the water is prevented from entering the battery attachment portion when the battery cover 142 is attached to the battery holder 144 by a bayonet mechanism. A cutout 147 is formed in the tubular battery attachment portion 145, so that the battery can be easily removed by hooking a finger. A recess 148 for inserting and turning a coin is formed on the surface of the battery cover 142, and characters and illustrations indicating the standard of the battery and the rotating direction for opening and closing are engraved at the periphery. Therefore, the user can detach the battery cover 142 from the battery holder 144 using a coin after checking the standard of the battery and the rotating direction of the battery cover 142 to replace the battery 141.

The anode fitting 143a and the cathode fitting 143b arranged in the battery holder 144 are respectively wire-connected to the display unit 150 shown in Fig. 14 with a lead wire, and the power is supplied from the battery 141 to the display unit 150. The lead wire is fixed to the battery holder 144 by way of a rubber cap 149, and such rubber cap 149 prevents water from entering the anode fitting 143a, the cathode fitting 143b, and the battery attachment portion 145 along the lead wire.

The battery 141 may be a primary battery or a secondary battery, and may be alkaline dry battery, manganese dry battery, silver oxide battery, air lead battery, and the like in addition to the lithium battery such as lithium manganese dioxide battery capable of stably supplying power for a long period of time at a relatively high voltage. The shape is preferably a small battery such as button shape or coin shape that is light weight and that does not require a large installation space. In the case of a small battery, the main body does not significantly enlarge or the weight does not significantly increase, and thus the cost also does not greatly increase.

The display unit 150 will be described below using Fig. 14.

The display unit 150 is arranged on the front surface side of the water purifier so that the display can be easily seen. The display unit 150 is arranged with a circuit board 151 provided with a CPU, a transparent board holder 152, a frame for circuit board 153 for supporting and fixing the circuit board 151 to the board holder 152, and a liquid crystal display unit 170. The CPU receives power supply from the power supply unit 140, performs calculation based on the pulse signal from the flow rate detector 120, and transmits an output signal to the liquid crystal display unit 170.

An operation button is arranged on the circuit board 151. A rest button 155 for returning the display content to an initial state and a cartridge select button 156 for setting the type of cartridge are arranged for the operation button. The circuit board 151 is arranged in the board holder 152 so that water does not enter therein, but the operation button arranged thereon needs to be able to be pushed. Thus, an operation opening is perforated at the portion of the operation button corresponding position of the board holder 152, and the opening is water tightly blocked with an elastic film. For such elastic film, flat plate-shaped switch rubbers 157, 158 are fitted therein, resin fixation frames 159a, 160a are arranged thereon to cover the peripheral edge of the switch rubbers, and the inner side of the fixation frames are ultrasonically welded so as to closely attach with the board holder. Therefore, ultrasonic welding portions 159b, 160b are formed at portions closely attaching to the board holder 152 on the back surface side of the fixation frames 159a, 160a.

The display unit 150 assembled as above is accommodated on the inner side of the water purifier main body, that is, in a space formed by the upper body 50 and the lower body 60. The lower body 60 is arranged with a rib (not shown) for positioning the display unit 150, and is fixed with the display unit 150. Switch operating portions 51 a, 52a are arranged at positions corresponding to the switch rubbers 157, 158 of the upper body 50. Since a member having projections 51 b, 52b arranged on the back side is arranged at the switch operating portions 51 a, 52a, the projections 51 b, 52b on the back side deform the switch rubber so as to reach the reset button 155 or the cartridge select button 156 when the switch operating portions 51 a, 52a are pushed, whereby the operation of pushing such buttons is performed. An elastic sheet is laminated on the front surface side of the switch operating portion 51 a, 52a.

Thus, the reset button 155 and the cartridge select button 156 arranged in the board holder can be pushed by pushing the switch operating portion 51 a, 52a arranged on the outer surface. Therefore, the button pushing operation in time of reset and in time of cartridge selection is facilitated. Furthermore, since the button does not need to be pushed with a pointed object such as a pencil, rubber damage at the surface of the button caused by the pointed object does not occur, the waterproof effect can be maintained over a long period of time, and malfunction of an accurate display, reset, and the like can be prevented. Moreover, the possibility in which the switch rubber may rip is eliminated since the projections 51 b, 52b on the back side of the switch operation portion has a shape without an acute angle portion.

In order to prevent water from entering inside the board holder 152 from the outside and the circuit board 151 from malfunctioning, preferably, the circuit board 151 and the liquid crystal display unit 170 are inserted in the board holder 152 and fixed with the frame for circuit board 153, and then sealed with the curable resin 154 (sealing material) and performed with the waterproof processing. The waterproof processing does not need to be individually performed on each part by performing the waterproof processing in such manner, whereby the manufacturing steps can be simplified and the manufacturing cost can be reduced. Two-liquid mixed type polyurethane resin, epoxy resin, and the like may be used for the curable resin 154.

The liquid crystal display unit 170 will now be described.

As shown in Fig. 14, the liquid crystal display unit 170 is positioned at the upper part on the front side of the main body 2 while being directly supported by and fixed to the circuit board 151, so as to be easily seen by the user during use. The liquid crystal display unit 170 may be arranged at a position spaced apart from the circuit board and wire-connected with the lead wire and the like, but the signal can be more reliably transmitted if directly supported by and fixed to the circuit board 151.

The circuit board 151 provided with the CPU calculates the integrated flow rate that passed through the flow rate detector 120 based on the pulse signal from the flow rate detector 120, and displays the result thereof. Regarding the display method, a filter cartridge replacement indication element 171 for counting down the integrated flow rate and notifying the cartridge lifespan, a battery replacement indication element 172 for indicating the replacement timing involved in the lowering of the voltage of the power supply unit 140, and a cartridge type indication element 173 for indicating the type of filter cartridge are arranged, which elements are turned ON, turned OFF, or flickered to indicate the lifespan of the cartridge, the lifespan of the battery, and the type of cartridge.

The display method of the cartridge lifespan may adopt a method of counting up from zero or a method of sequentially turning ON or OFF a plurality of blocks other than counting down the integrated flow rate.

A plurality of filter cartridges 3 with different lifespan is prepared according to the volume and the ability of an adsorbent layer 211 and the like filled inside. The user can appropriately select the filter cartridge 3 according to the ability and the lifespan, operate the cartridge select button 156 according to the selected filter cartridge 3, and set the appropriate cartridge lifespan.

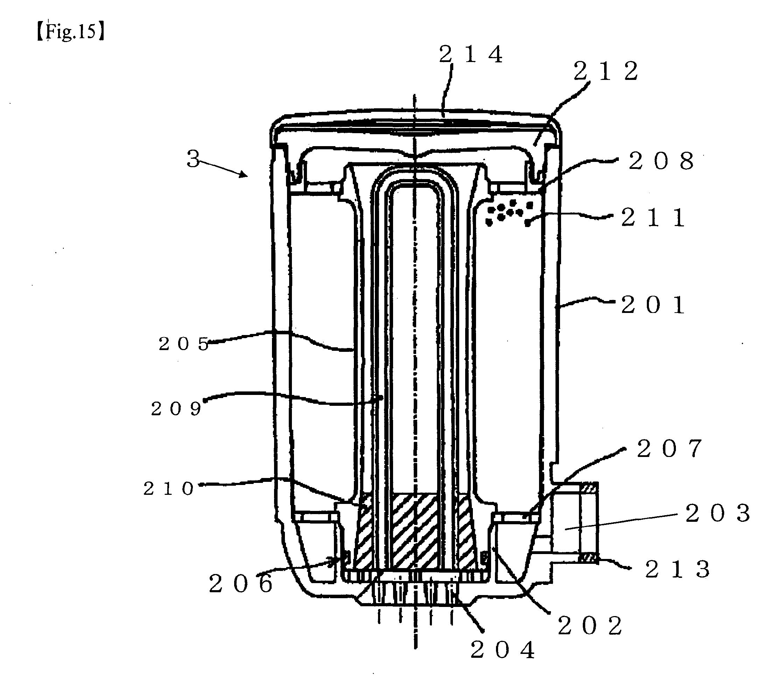

The filter cartridge 3 will be briefly described with reference to Fig. 15.

The filter cartridge 3 has a raw water receiving port 203 connected to the raw water feeding pipe 110 shown in Fig. 10 arranged at the side part of a case 201, and a purifier water discharge port 204 including a plurality of shower holes for filtering the raw water taken in from the raw water receiving port 203 and discharging the same as purified water arranged at the lower part of the case 201. A cylindrical projection 202 formed at the bottom surface on the interior of the case 201 has a lower end of a cylindrical member 205 fitted therein and arranged by way of the O-ring 206, and the outer peripheral surface at the upper and lower ends of the cylindrical member 205 are fixed to the inner wall surface of the case 201 by way of ring-shaped primary filter 207 and secondary filter 208.

A hollow fiber bundle 209 in which a plurality of hollow fibers is bundled and bent to a reverse U-shape and accommodated is arranged inside the cylindrical member 205. Both terminals of the hollow fiber bundle 209 are sealed and fixed (potted) with a curable resin 210 serving as a sealing agent filled to the gap between the hollow fibers and between the hollow fiber bundle and the cylindrical member 205 at the lower part of the cylindrical member 205. Since the potted portion is partially cut and removed before fitting to the case 201, the terminals of the hollow fiber bundle 209 are opened towards the purified water discharge port 204.

A substantially cylindrical space formed between the cylindrical member 205 and the inner wall surface of the case 201 is arranged with the adsorbent layer 211 made of activated carbon, zeolite, ion exchange resin, chelate resin and the like. A transparent cap 212 is fitted at the upper part of the case 201 so that the hollow fiber bundle 209 and the adsorbent layer 211 can be easily filled in the case 201 and the degree of stain of the hollow fiber can be easily seen from the outside. A cap 214 is removably arranged with the case 201 at the upper part of the transparent cap 212.

## Claims

1. A water purifier including a flow path switch with a plurality of flow paths and a valve body for selectively opening and closing the plurality of flow paths, wherein
for the flow path arranged in the flow path switch, at least a raw water shower introduction port and a raw water stream introduction port are arranged, a raw water discharge shower discharge port is arranged on a downstream side of the raw water shower introduction port and a raw water stream discharge port is arranged on a downstream side of the raw water stream introduction port, and a substantially disc-shaped rectifier plate with a plurality of water flow holes is arranged on a flow path between the raw water shower introduction port and the raw water shower discharge port.

2. The water purifier according to claim 1, wherein a diameter of the plurality of water flow holes formed in the rectifier plate is greater than a diameter of a shower discharge hole formed in the shower discharge port.

3. The water purifier according to claim 1 or 2, wherein a sum of area of the plurality of water flow holes formed in the rectifier plate at a rectifier surface of the rectifier plate is greater than a sum of area of a shower discharge hole formed at the shower discharge port at a shower discharge port surface of the shower discharge port.

4. The water purifier according to any one of claims 1 to 3, wherein the raw water shower discharge port has a substantially circular ring shape, the raw water stream discharge port being formed at substantially the middle.

5. The water purifier according to any one of claims 1 to 4, wherein
a cylindrical rib for covering the periphery of the raw water stream discharge port is arranged; and
the raw water stream introduction port is arranged immediately above the raw water stream discharge port.

6. The water purifier according to any one of claims 1 to 5, wherein a hole thickness L of the shower discharge hole at the shower discharge port is smaller than or equal to 1 mm.

7. A water purifier including a main body internally incorporating a selection valve and a filter cartridge removably attached to the main body; wherein
the main body includes,
a raw water inflow port for receiving raw water,
a raw water discharge port for discharging the raw water, and
a cartridge water feeding port including a raw water feeding port for passing the raw water to the filter cartridge;
the raw water discharge port has a structure in which a raw water stream discharge hole is arranged at a central part and a plurality of raw water shower discharge holes is formed at a substantially circular ring part of the peripheral edge;
the substantially circular ring part formed with the plurality of raw water shower discharge holes is made of a circular ring-shaped stainless steel plate perforated with the plurality of shower discharge holes and formed with cutouts at peripheral edges; and
an inner peripheral edge and an outer peripheral edge of the circular ring-shaped stainless steel plate are sandwiched with resin forming a lower body of the main body.

8. The water purifier according to claim 7, wherein the circular ring-shaped stainless steel plate is integrally molded with the lower body of the main body.

9. The water purifier according to claim 7 or 8, wherein the circular ring-shaped stainless steel plate has the inner peripheral edge and the outer peripheral edge sandwiched with ribs and is formed with ribs directly connecting the inner peripheral edge and the outer peripheral edge.

10. The water purifier according to claim 9, wherein one to three ribs connecting the inner peripheral edge and the outer peripheral edge are arranged towards the back side of the water purifier.

11. The water purifier according to any one of claims 7 to 10, wherein a thickness of the circular-ring shaped stainless steel plate is in a range of between 0.5 and 1.0 mm.

12. The water purifier according to any one of claims 7 to 11, wherein a portion of the raw water shower discharge port attached with the circular-ring shaped stainless steel plate is a separate member removable with respect to the main body.

13. A water purifier including a selection valve body with a camshaft and a plurality of selection valves, a selection lever connected to the camshaft, a ratchet mechanism or a one-way clutch mechanism for transmitting the rotational operation of the selection lever to the camshaft, and a return spring for returning the selection lever to an original position; wherein
the selection lever is arranged facing upward or downward at the side of the water purifier, rotated to the back side by a pushing operation or the front side by a pulling operation, and automatically returned to the original position facing upward or upward by the return spring after the rotation.

14. The water purifier according to claim 13, wherein a connection tube is arranged at an end of the camshaft coupled with the selection lever, a locking rib for preventing slip-out is arranged at an outer periphery of the connection tube, and an indication member for indicating a water discharge state is arranged on an outer peripheral side of the connection tube.

15. The water purifier according to claim 14, wherein a ratchet teeth and a ratchet pawl receiving portion for engaging with a ratchet pawl member configuring the ratchet mechanism are arranged on an inner side of the connection tube and the end of the camshaft coupled with the connection tube, respectively.

16. The water purifier according to any one of claims 13 to 15, wherein the selection valve body is arranged with two ribs so as to cover the coupling portion of the camshaft and the selection lever, the portion corresponding to the indication member for indicating the water discharge state being arranged between a gap where the two ribs are not present.

17. The water purifier according to any one of claims 13 to 16, wherein the locking rib arranged at the outer periphery of the connection tube of the selection lever rotates along the ends of the two ribs.

18. The water purifier according to any one of claims 13 to 17, wherein a spring receiving portion is arranged so as to project from the locking rib arranged at the outer periphery of the connection tube of the selection lever, the spring receiving portion being contacted to one of the two ribs to determine the rotation range by the rotational operation of the selection lever.

19. The water purifier according to any one of claims 13 to 18, wherein a spring accommodating portion is arranged on the rear surface side of the selection valve body.

20. The water purifier according to any one of claims 13 to 19, wherein the raw water feeding pipe for feeding the raw water to the filter cartridge attached to the water purifier main body is connected to the downstream side of the selection valve body, and a fit-in portion for connection of the raw water feeding pipe is arranged on a rear surface side of the selection valve body, the fit―in portion being arranged with a fixation rib for fixing the raw water feeding pipe.

21. The water purifier according to any one of claims 13 to 20, wherein the raw water feeding pipe includes a first end to be connected to the selection valve body and a second end for connecting the filter cartridge, a rotation shaft for supporting water wheel for flow rate detection is arranged inside the raw water feeding pipe, and an engagement portion for engaging with the fixation rib of the selection valve body is arranged at the first end.

22. A water purifier including a main body internally incorporating a selection valve and a filter cartridge removably attached to the main body; wherein
a resin body configuring the main body is formed with an application film made of transparent resin material including fluorocarbon resin or silicone resin on an outer surface.

23. The water purifier according to claim 22, wherein the application film is a film formed by applying an adhesive augmenting agent to the outer surface of the resin body and then applying the transparent resin material thereto.

24. The water purifier according to claim 22 to 23, wherein the application film is a film formed by applying and reaction-curable a fluorine or silicone reaction-curable material containing catalytic agent.

25. The water purifier according to claim 24, wherein the catalytic agent contained in the reaction curable material is one of dibutyl tin, aluminum complex, zirconium complex, and titanium oxide.

26. The water purifier according to any one of claims 22 to 25, wherein a thickness of the application film is between 10 and 30 µm.
